# EUROPEAN PATENT SPECIFICATION

(11) **EP 1 547 882 B1**
(45) Date of publication and mention of the grant of the patent: **02.05.2007**
(21) Application number: 03790965.2
(22) Date of filing: 22.08.2003
(51) Int. Cl.: B60S 1/38, B60S 1/52

(54) **WINDSCREEN WIPER COMPRISING A MOBILE DOUBLE WIPER**
SCHEIBENWISCHER MIT EINEM MOBILEN DOPPELWISCHER
ESSUIE-GLACE A DOUBLE BALAI MOBILE

(30) Priority: 31.08.2002 ES 200202002
(43) Date of publication of application: 29.06.2005
(73) Proprietor: Leunamme Engineering S.L., 50004 Zaragoza (ES)
(72) Inventor: GARCIA DE LA PENA RAZQUIN, Emmanuel, E-50004 Zaragoza (ES)
(74) Representative: PROPI, S.L.
(86) International application number: PCT/ES2003/000434
(87) International publication number: WO 2004/020260

(56) References cited:
- ES-A1- 486 615
- GB-A- 2 106 775
- US-A- 4 719 661
- US-A- 5 168 595
- US-A- 5 301 384
- US-A- 5 442 834

## Description

The aim of this invention called "Dual movable blade windshield wiper" is to optimise the automatic cleaning of the car windshields in driving condition.

In particular the known and unsolved problem of cleaning insect remains after its impact against the windshield.

### STATE OF THE ART

After analysing the information shown in the International Search Report the following can be stated: Closest Prior art on the disclosure of which is based the precharacterising portion of claim 1 can be considered as the Patent ES-A-486615, this patent from 1978 discloses a wiper system with an additional movable blade actuated by a cylinder on top of it. Such a device nowadays is cosmeticwise un saleable and its functionality questionable due to the high inertia that such a weight would incorporate to the wiper movement. Patent US-A-3192551 (not mentioned in the search report) is the prior art for the version described in page 3 lines 24-26.Patents US-A-5168595, US-A-5301384 and US-A-5442834 are only considering a rotating movement operated by a bowden cable or motor, which is not claimed in this patent. Patents GB-A-2106775 and US-A-4719661 have nothing to do with this invention.

Despite of disclosed prior, art the product described below in detail presents enough differences with those patents and with current existing products to enable us to consider it with novelty, inventive step and industrial applicability.

### DESCRIPTION

The present invention consists in incorporating to conventional wipers an additional blade composed of abrasive material with insect remains (or any other kind of dirt like: dirt from trees -when you park under it-, dirt of trucks, dirt of birds, frost, etc) and not abrasive (scratch resistant) with glass. Blade can be reversible having ice scratcher in one face and scourer on the other. This kind of materials are available in the market, as sponges, scratch free plastic and no plastic scourers, brushes like the ones used on toothbrush, WC brushes, etc.

This additional blade has movement, in the sense that it has only contact with the windshield when the user wants to make the cleaning function. At the same, time the arm makes more force to increase the pressure against the windshield. It means that in regular rain conditions, with the standard wiper working, only the standard rubber blade is in contact with the windshield. The additional blade could be exchanged by a spare part when deteriorated by usage and its function it is not good.

Due to cosmetic and cost reasons this additional blade would be integrated into the wiper spoiler.

The cleaning function would be composed of several cycles where the water nozzles and the additional blade would be activated with a higher pressure against the windshield during a number of loops. After this, the conventional blade would return to contact the windshield, to remove the water and the adrift remains from the windshield, leaving it clean as when you perform it manually in a Gas Station, since basically, it makes in automatic mode the same cleaning process.

The present invention considers the variant in which the additional blade approaches the windshield rejecting the conventional rubber blade with a parallel movement to the conventional blade.

The variant in which the additional blade approaches the windshield rejecting the conventional rubber blade with a rotation which axle is parallel to both blades forms no part of the invention.

### DRAWING DESCRIPTION

### Variant 1 forming the invention :

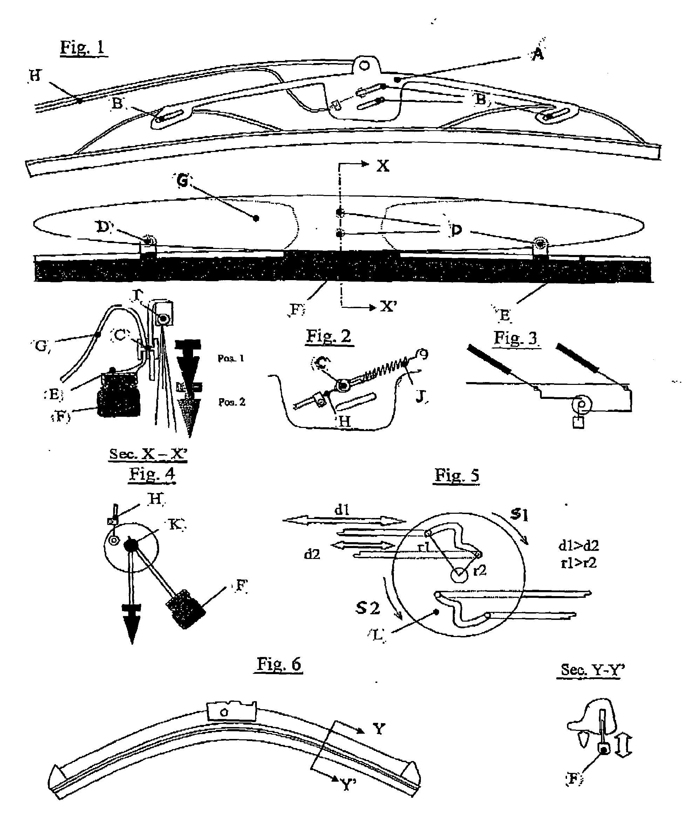

In Fig. 1 it can be seen slotted holes in angle (B) in the conventional blade holder (A). The plastic or metallic rivets (C) that are fixed to the holes (D) from the assembly spoiler-additional blade holder-additional blade (E-F-G) are sliding along the mentioned slotted holes (B). In section X-X' it can be seen how the holder (E) from the additional blade (F) integrates the spoiler (G) as well as the position of the additional blade during the cleaning operation (Pos. 1) and the normal function with rain (pos. 2)

In Fig. 2 it can be seen how the movement of the additional blade (F) is achieved by the pulling of the rivets (C) from the assembly (E-F-G) by a bowden cable or nylon wire (H), which is activated by an electrical motor. The assembly also incorporates a spring (J) that helps to reject the blade (F) from the windshield.

The bowden cable (H) is routed along the wiper arms (see Fig. 1), goes through the car cowl towards the plenum chamber, where the motor is located integrated into the wiper linkage assembly (see Fig 3). The motor can also be located in the holder (A), in this case no bowden cable would be needed.

### Variant 2 forming no part of the invention :

In Fig. 4 it can be seen how in this variant the contact of the abrasive blade is achieved by the rotation following a longitudinal axis (K).

Said rotation can be achieved in two ways:
1. Operating a bowden cable (H) with a motor as in variant 1.
2. Operating a bowden cable (H) with a cam-disk (L) having an spiral slot linked to the wiper motor as the one drawn in fig 5, a longer travel (d1) can be achieved by inverting the rotation sense of the wiper motor- By increasing the travel, the bowden cable pulls in the other extreme the additional blade holder (E) through the rivets (C) see fig 2. The way of operating the bowden cable described in point 2 can be also used to generate the parallel displacement described in variant 1.

In both variants, conventional nozzles located in the hood or in the cowl can apply the washing liquid. Nevertheless, to improve the performance of the abrasive blade, it is advisable to have the nozzles (I) located between the conventional and the abrasive blade with several nozzles spread along the whole length. (see section X-X' in Fig. 1). Both variants are applicable in the new rising technology of standard blades hold by a bended metal band. In this cases, due to the non presence of a spoiler, the additional blade is integrated in the assembly composed by the metal band and its housing (see Fig. 6)

## Claims

1. A dual movable windshield wiper comprising a wiper arm (A) having: a conventional rubber blade; an additional blade (F) made of dirtiness-abrasive and glass-non-abrasive material supported on an additional blade holder (E); said additional blade (F) having a working position wherein the windshield is wiped by the additional blade (F) and an idle position wherein the windshield is wiped by the conventional blade, said additional blade (F) being movable through a bowden cable (H) between said positions by being displaceable in a plane parallel to the conventional blade; **characterised in that**: the additional blade (F) is movable under activation via a pushed/ pulled rod or bowden cable (H) wherein a plurality of rivets (C) have the additional blade holder (E) attached so that the additional blade holder (E) is displaced along a plurality of slots (B) located in the conventional blade holder (A) to position the additional blade (F) to the working position.

2. The dual movable windshield wiper as of claim 1 wherein a pressure of the additional blade (F) against the windshield is increased as the additional blade is in its working position, the wiper arm makes more force to increase the pressure against the windshield.

3. The dual movable windshield wiper as of claim 1 and 2 wherein the additional blade (F) is integrated into the spoiler (G).

4. The dual movable windshield wiper as of claim 1 and 2 wherein the conventional blade is held by a curved metal band (see Fig. 6), the joining elements of the conventional blade and the additional blade (F) being fixed to said metal band so as to enable relative movement between the conventional blade and the additional blade (F).

5. The dual movable windshield wiper as of any of claims 1-4 wherein the additional blade (F) is configured to be exchangeable by a spare part.

6. The dual movable windshield wiper as of claim 5 wherein the additional blade (F) comprises two assembly positions: a basic position for frost-free but flying-insects weather seasons and an alternative position for frost but no-flying-insects weather seasons.

7. The dual movable windshield wiper as of claim 6 further comprising a plurality of water nozzles (I) located and distributed along a plane parallel to the blades.

8. The dual movable windshield wiper as of claim 7 wherein the abrasive material is a glass scratch-free scourer or brush.

9. The dual movable windshield wiper as of claim 8 wherein the push-pull movement of the bowden cable or rod is achieved with the main wiper motor by a cinematic chain comprised by a cam disk and /or gears and reversing or not the motor turning direction.

## Patentansprüche

1. Der zweifach bewegliche Scheibenwischer, einschließlich des Wischerarmes (A) besteht aus: einem konventionellen Wischerblatt, einem zusätzlichem Wische (F), der aus einem schmutzabreibenden und nicht das Glas beschädigenden Material hergestellt ist und an einen zusätzlichem Wischerhalter efestigt ist, genannt zusätzlicher Wischer (F). Dieser hat eine Arbeitsposition, bei der die Windschutzscheibe gereinigt wird durch einen zusätzlichen Wischer (F) und während der Ruhestellung, bei der die indschutzscheibe durch den konventionellen Wischer gereinigt wird. Dieser durch einen Baudenzug ewegt werden kann zwischen diesen genannten Positionen.

2. Der Druck auf den zusäzlichen Wischer des bewegliche Scheibenwischer, wie gezeigt in 1+2, wird erhöht, wenn der zusätzliche Wischersich in Arbeitsposition befindet und **dadurch** der Wischer mehr ruck auf die Windschutzscheibe ausübt.

3. Der zweifach bewegliche Scheibenwischer, wie gezeigt in 1+2, ist dem Spoiler (G) integriert.

4. Der zweifach bewegliche Scheibenwischer, wie gezeigt in 1+2, besteht aus dem konventionellen Wischer, der in einem gebogenen Metallband gehalten wird (siehe Fig. 6). Die Verbindungselemente des konventionellen und des zusätzlichen Wischers (F) fixieren das Metallband so, dass eine relativbewegung zwischen dem konventionellen und dem zusätzlichem Wischer entstehen kann.

5. Der zusätzliche Wischer des zweifach beweglichen Scheibenwischers, wie gezeigt in 1+2, ist als auswechselbares Ersatzteil konfiguriert.

6. Der zusätzliche Wischer des zweifach beweglichen Scheibenwischers, wie gezeigt in 1+2, vereinigt zwei verschiedene Positionen: Eine Grundposition für frostfreies Wetter, bei dem Insekten die Windschutzscheibe verschmutzen und eine alternative Position für Frost ohne Insektenverschmutzung.

7. Der zweifach bewegliche Scheibenwischer, wie gezeigt in 6, beinhaltet eine Anzahl von Wasserdüsen, die parallel zum Wischerblatt im Halter angeordnet und verteilt sind.

8. Der zweifach bewegliche Scheibenwischer, wie gezeigt in 7, besteht aus verschleißenden Material aber nicht die Scheibe beschädigenden Bürsten oder Wascher.

9. Die Zug- und Druckbewegungen des zweifach bewegliche Scheibenwischer, wie gezeigt in 8, werden durch einen Bowdenzug oder Gestänge wie beschrieben in 1 erreicht und angetrieben durch den Wischermotor und einer kinematischen Kurvenscheibe und/oder Getriebe und Rückstellung, aber nicht durch die Motordrehrichtung erreicht.

## Revendications

1. - Un double essuie-glace mobile composé d'un balai (A) comprenant : une lame conventionnelle en caoutchouc ; une lame additionnelle (F) qui contient un abrasif anti-saleté (mais non-abrasif pour le verre) montée sur un support de lame supplémentaire (E) ; la dite lame additionnelle (F) ; ayant une position d'action, dans laquelle le pare-brise est essuyé par la lame additionnelle (F), et une position de repos, dans laquelle le pare-brise est essuyé par la lame conventionnelle ; la dite lame additionnelle (F) pouvant se mouvoir grâce à un câble Bowden (H) entre les dites positions puisqu'elle peut se déplacer parrallélépipédiquement par rapport à la lame conventionnelle ; qui se **caractérise par le fait que** : la lame additionnelle (F) se déplace sous l'effet d'une tige ou câble Bowden, poussé ou tiré (H), sur lequel plusieurs rivets (C) maintiennent attaché le support de la lame additionnelle (E), de telle façon que le support supplémentaire (E) puisse se déplacer le long de multiples fentes (B) situées sur le support de la lame conventionnelle (A) afin que la lame additionnelle (F) se place en position d'action.

2. - Le double essuie-glace mobile, comme précédemment décrit dans la revendication 1, dans lequel la pression de la lame additionnelle (F) est augmentée lorsque cette dernière est en position d'action, le balai exerçant plus de force pour accroître la pression sur le pare-brise.

3. - Le double essuie-glace mobile, comme précédemment décrit dans les revendications 1 et 2, dans lequel la lame additionnelle est intégrée dans le spoiler (G).

4. - Le double essuie-glace mobile, comme précédemment décrit dans les revendications 1 et 2, dans lequel la lame conventionnelle est maintenue par une lame de métal incurvée (voir Image 6), les éléments de raccordement entre la lame conventionnelle et la lame additionnelle (F) étant fixés sur la dite lame de métal afin de permettre un mouvement relatif entre la lame conventionnelle et la lame additionnelle (F).

5. - Le double essuie-glace mobile, comme précédemment décrit dans les revendications 1 à 4, dans lequel la lame additionnelle (F) est configurée pour pouvoir être remplacé par une pièce de rechange.

6. - Le double essuie-glace mobile, comme précédemment décrit dans la revendication 5, dans lequel la lame additionnelle (F) admet deux positions de montage : une première position pour les saisons sans gel, mais avec insectes volants ; une seconde position pour les saisons avec gel, mais sans insectes volants.

7. - Le double essuie-glace mobile, comme précédemment décrit dans la revendication 6, comprend de plus de nombreux gicleurs d'eau, situés et répartis le long des lames.

8. - Le double essuie-glace mobile, comme précédemment décrit dans la revendication 7, dans lequel le matériel abrasif est un coureur ou balai qui ne raye pas le verre.

9. - Le double essuie-glace mobile, comme précédemment décrit dans la revendication 8, dans lequel le mouvement « pousser - tirer » de la tige ou câble Bowden, décrit dans la revendication 1, est accompli par le moteur du balai principal grâce à une chaîne cinématique composée d'une came et/ou d'engrenages, et en inversant ou non le sens dans lequel tourne le moteur.
